# EUROPEAN PATENT SPECIFICATION

(11) **EP 3 215 439 B1**
(45) Date of publication and mention of the grant of the patent: **12.12.2018**
(21) Application number: 15816253.7
(22) Date of filing: 20.10.2015
(51) Int. Cl.: B65D 65/46, B65D 33/01, B65D 81/26, B65D 85/34

(54) **A FLEXIBLE PACKAGE FOR PACKING FRESH PRODUCE MADE FROM A BIODEGRADABLE FLEXIBLE FILM**
FLEXIBLE VERPACKUNG ZUM VERPACKEN VON FRISCHWAREN AUS EINER BIOLOGISCH ABBAUBAREN FLEXIBLEN FOLIE
EMBALLAGE SOUPLE PERMETTANT DE CONDITIONNER DES PRODUITS FRAIS ET CONSTITUÉ D'UN FILM SOUPLE BIODÉGRADABLE

(30) Priority: 03.11.2014 IN 3161DE2014
(43) Date of publication of application: 13.09.2017
(73) Proprietor: Chaturvedi, Ashok, New Delhi 110 048 (IN)
(72) Inventor: Chaturvedi, Ashok, New Delhi 110 048 (IN)
(74) Representative: Schön, Christoph
(86) International application number: PCT/IN2015/000397
(87) International publication number: WO 2016/071922

(56) References cited:
- WO-A1-99/46175
- WO-A1-2010/060444
- WO-A1-2013/186778
- FR-A1- 2 383 850
- US-A- 5 226 735

## Description

### Field of the Invention

The present invention relates, in general, to a flexible package for packing of fresh produce. More particularly, the present invention relates to a package made from a biodegradable flexible polymeric packaging film for manufacturing the flexible package in conjunction with a modified atmospheric packaging (MAP) for packing fresh produce such as fruits, vegetables, flowers or the like food articles having moisture content therein.

### Background of the Invention

Packaging and storage of fresh produce such as fruits, vegetables, flowers and the like fresh food items/articles which have higher moisture content, have been a challenge for years. Commonly available Polymeric films such as Polyethylene, Polypropylene, Polyesters or their laminates are used in flexible packaging for the purpose of providing functional requirements such as transparency, strength, sealability. Such film also incorporates different levels of barrier to Oxygen and moisture. Oxygen and moisture barrier creates humidity leading to anaerobic conditions inside the pack and presence of moisture leads to accelerated spoilage of the fresh produce more so when water droplets are formed due to condensation. The present polymeric films are mostly used for processed foods, Industrial Chemicals, Personal Products and a whole host of day to day items packed in flexible packaging.

However in the case of packaging of fresh produce, the product continues to respire until the consumption or useful shelf life of the product. Such fresh products may include fruits, vegetables, flowers and the like articles having moisture content therein. Normally the product is considered unfit for consumption when it has lost lots of moisture or if there is any change in color or change in form from raw to over ripened fruit where the decay is caused due to aging process. It is also noted that due to heat generated during the respiration process in packaged fresh produce, moisture is released due to transpiration. The amount of moisture released is dependent on the product, the storage temperature and the rate of respiration.

It has been noticed extensively, that when fresh produce respires, it generates thermal energy due to which the released humidity leads to increase in moisture, and begins to accumulate in the form of water droplets inside the closed package. This humid atmosphere initially wraps the product surface and gradually induces the process of decaying as more moisture builds up in the package. Further, as the product respires inside the package beside the heat generation, few gases may release from the fresh produce, such as CO₂ (carbon dioxide). The released gases such as CO₂ tend to react with the accumulated water droplets which are present inside the package. The water dissolves the carbon dioxide in the package forming carbonic acid. The carbonic acid eventually spoils the taste of the fresh produce stored in the package. The existing packages made of films as described above, has low Water Vapour Transmission Rate (WVTR) and Oxygen Transmission Rate (OTR). Therefore they are neither able to absorb the moisture / water droplets released from the product nor they are able to allow exchange of humidity or gases from the package which are being released during respiration of the product stored in the package.

Although one common method for packaging the food articles such as fruits, vegetables and flowers is being used to extend the shelf life and to overcome the above problem upto little extent is by providing means to allow controlled respiration such as calibrated perforation (see WO 2010/060 444 A1 or WO99/46175 A1) to act as modified atmosphere packaging (MAP). MAP allows restricted exchange of oxygen, carbon dioxide and other gases to reduce respiration of the fruits, vegetables and the flowers contained therein. The reduced respiration results in longer shelf life of the stored food articles. Also the reduced respiration decreases ripening, retards spread of pathogens, inhibit toughening and undesirable change in color, smell and taste of the fruits, vegetables and the flowers.

MAP technology helps in achieving the controlled breathing of the fresh produce to be stored in the polymeric package. So far, the problem associated with dumping of polymeric film material is also one of the important concerns for development of environment friendly packaging film for the packaging industry. As the commonly existing packages are made from such film materials which are non-biodegradable, hence they remain as discarded for many years or may be forever. Consequently, the dumping of such materials leads in environmental pollution.

Further, to meet the increasing demand of fresh produce such as fruits, flowers and vegetables and the like food articles by both consumers and retailers inside and outside a country, fruits, vegetables and flowers suppliers need to transport and deliver packed fresh produce that remain fresh for a long time. As well as it is needed to prevent the damage caused while transporting and exporting them to various places. Many a times, these fresh produces need to be preserved for up to a few days or weeks or even longer. In addition to providing long shelf life of these fresh produces, suppliers also need to ensure that the packed fresh produce is safe from physical damage. Additionally the packaging after use should not pollute the environment.

For example, products like flowers are currently transported from farm to the market in cold chain or by Air. Markets are distant from the farms, and sometimes the flowers are generally grown overseas, due to which the flowers are immediately immersed in water to avoid dehydration, as the flowers tend to lose moisture. Loss in moisture leads to decrease in weight of the flowers, and further decreases the quality and shelf life. Also, when such moisture losing flowers are kept in current packages for transportation, the moisture as accumulated in the package may lead one or more problems stated earlier. Hence, such a process involves huge transportation and logistics costs, along with costs incurred due to spoilage of the flowers or the fresh produce.

Therefore, there exists a need for an improved packaging solution for perishable food articles or fresh produce which provides safe packaging, transportation and storage of the fresh produce. Additionally, there is a need to have a packaging solution which is eco-friendly and does not lead to environment pollution.

### Objects of the Present Invention:

The main object of the present invention is to overcome at least one of the above problems.

One object of the present invention is to provide a flexible package made from a biodegradable flexible polymeric packaging film in conjunction with modified atmospheric packaging (MAP) so as to facilitate humidity exchange and controlled exchange of the oxygen, carbon dioxide and other gases as required for fresh produce stored in the package to enhance the shelf life thereof.

### Summary of the Present Invention:

The present invention relates to a flexible package made from a biodegradable polymeric flexible film according to the 1-14. The flexible package includes a pair of opposite panels. The flexible package further includes at least one pair of side gussets configured to attach the pair of panels to form a receptacle having at least three closed sides, the receptacle having at least one open end for receiving a fresh produce. The flexible package also includes a plurality of apertures provided on at least one of the panels and / or the side gussets. The apertures are configured to provide a modified atmosphere packaging (MAP) for the fresh produce packed within the flexible package, wherein the biodegradable polymeric flexible film in conjunction with the modified atmosphere packaging (MAP) facilitates humidity exchange and controlled exchange of gases associated with the fresh produce.

### Detailed Description of the Present Invention

Accordingly, the present invention provides a flexible package made from a biodegradable flexible polymeric packaging film for packing fresh produce according to an embodiment of the present invention. In an embodiment, the fresh produce includes fruits, vegetables, flowers, or the like products. The said film exhibit controlled humidity and oxygen transmission suitable for fresh produce. The said film allows escape of humidity from the package through the polymeric structure of the film which otherwise would have accumulated as water droplets on inner surface of the closed package and on the surface of the fresh produce in the package.

In various exemplary embodiments, the film may comprises various kind of partly or fully laminated structures, single layer substrate, including but not limited to, multi-layer paper laminate, polymeric laminate, single or multilayer polymeric films etc. A layer of metallization may also be provided wherever desired.

The film is made from a combination of biodegradable polymers in a combination of one or more materials, including but not limited to, Polyhydroxyalkanoates (PHAs), Poly-3-hydroxybutyrate (PHB), Polyhydroxyvalerate (PHV), Polyhydroxyhexanoate (PHH), Cellulose Acetate, Nitrocellulose, Poly Lactic Acid, Polybutylene Succinate (PBS), Polycaprolactone (PCL), Polyanhydrides etc. According to an essential feature of the invention, the film has a Water Vapor transmission rate (WVTR) between 50-300 gms/ 24hr/m² at 38° C and 90% relative humidity (RH) and Oxygen transmission rate (OTR) between 1000 - 4000 CC/24hr/m² at 23° C. The material as described above may be converted to film using extrusion processes such as Blown, Cast or Calendered suitably oriented depending on thickness required, barrier and other mechanical properties required.

The flexible package made from the said biodegradable polymeric flexible film comprises a pair of opposite panels, such as a first panel and a second panel configured to define a receptacle having at least one open end for receiving the fresh produce. In an exemplary embodiment, the package may be formed by using one or more webs to form the receptacle. In an alternative embodiment of the present invention, the package may be formed by using a single web which is folded and ends across the width of the web are sealed and another sealing is done perpendicular to the sealed width leaving the other end open to form the receptacle. In this case, the single web itself forms the first and the second panel and optionally may also form side gusset. The web(s) may be sealed to form the package, by way of heat sealing, ultrasonic sealing, laser sealing, adhesive sealing, etc., or a combination thereof. It may be contemplated that any type of flexible packages made from biodegradable polymeric flexible film, such as packages having two side gussets, three side gussets, four side gussets, reclosable press to close zipper packages, slider zipper packages, etc., may be considered within the scope of the present invention.

According to the present invention the said packages are designed to be used in combination with modified atmosphere packaging and controlled and monitored temperature during supply chain to achieve the best shelf life extension of the product. The flexible package may include a plurality of apertures or laser perforation provided on at least one of the panels. The apertures are configured to provide a modified atmosphere packaging (MAP) for the fresh produce packed within the flexible package. The aperture formation or laser perforation may be done on the film in accordance with the respiration rate of the product to be packed to ensure the availability of balance of desirable controlled exchange of oxygen, carbon dioxide, nitrogen and other gases to the product. The respiration rate can be measured with the help of respiration meter so as to understand the rate of respiration of a specific fresh produce. Accordingly, the perforations or apertures may be calculated and provided on the film. In an exemplary embodiment of the present invention, the apertures are provided on either of the first and the second panel, or on both. In an alternative embodiment, the apertures may be provided on any of the side gussets of the package for the sake of simplicity in manufacturing the package. It may be contemplated that the apertures may be provided on a combination of the side gussets and/or the panels of the package. In an exemplary embodiment of the present invention, the number, shape and size of the apertures may be predetermined based on the respiration rate of the product to be packed and considering the compensation for the permeability properties of the film used to manufacture the package. More specifically, the number and the size of the apertures may be selected based on the estimated requirement of exchange of oxygen and other gases as per the respiration characteristics of the product.

For example, the number and size of the apertures for a package made for packing of mango and a package made for packing of cauliflower may be different. In various exemplary embodiments, the apertures may be made by using Laser beam or mechanical perforation or die punching etc. In an embodiment, the package may include the apertures at predefined positions.

In an exemplary embodiment, the package includes at least one open end, to facilitate receiving of the fresh produce within the receptacle of the package. Further, the open end may be sealed by using suitable sealing methods to retain the fresh produce within the package. In an exemplary embodiment, the sealed portion may be tearable by a 'V' notch or a slit to take out the produce from the package.

The film of the package in conjunction with MAP allows the humidity exchange from the package. The said film in conjunction with the MAP ensures that the atmosphere inside the package remains suitable for the enhanced shelf life of the fresh produce. In other words, the said film and the MAP ensures that when a fresh produce packed in the package respires, the heat and humidity releasing from the fresh produce during respiration leading to moisture, and must escape out from the package through the polymeric structure of the said film and the apertures provided for the MAP provide controlled exchange of gases for controlled respiration of fresh produce and keep the inner atmosphere suitable for the packed fresh produce. Consequently, the produce does not decay in package due to the moisture accumulation, heat generation or release of gases during respiration process of the fresh produce. The properties of the film offering very high Water Vapour Transmission Rate (WVTR) help in reducing excess moisture inside the package and helps keep the product totally dry inside the package. The polymeric structure of the film and MAP provides Oxygen transmission values inside the package to ensure that the required Oxygen may be available for the product. As well as the gases exhaled during the respiration such as Carbon Dioxide may be released through the film and the MAP ensuring that the product packed in the package is in aerobic condition but respiring in controlled manner for enhanced life.

The package made from the said biodegradable film may be used for small volume fresh produce or individual produce according to an embodiment of the present invention. Such packages may be made according to necessity and requirement of the user or as per the requirement of the Modern Retail chain. Also, packages for storing large quantity may be made to pack fresh produce and used for transporting the fresh produce from farms to the markets. The said packages may be used in consumer packages for small volume fresh produce used in Modern Retail stores as packaged fresh produce bags and also as large liner bags used for transporting the fresh produce from Farm to the markets.

The biodegradable flexible polymer film of present invention may be formed in transparent form according to an embodiment of the present invention. The package made from transparent film allows the user to see the contents visually inside the package.

In an exemplary embodiment, the package may be provided with one or more handles either on panel or on gusset or in combination thereof.

The apertures described in present invention may be formed on the web before the package formation. It may also be contemplated that forming the package first and then forming the apertures on at least one side of the package is also considered to be within the scope of the present invention.

The main advantage of the present invention is to provide a biodegradable flexible polymeric packaging film. The package made from the said film offers a sustainable packaging solution to the consumer using biodegradable polymers in combination with high moisture release which further may be combined with modified atmosphere packaging (MAP) to ensure that the fresh produce is aerobic and the required amount of Oxygen is maintained in the package.

The package of the present invention facilitates packaging of fresh produce based on their specific breathing requirements, thereby resulting in an increased shelf life of the produce. The fresh produce remains fresh for a longer time in the package. As stated earlier in the background, when using the present flexible packages, the fresh produce, such as flowers do not loose moisture, thus maintaining weight and quality of the flowers. Thus, the flowers can be transported by sea that is much cheaper but takes longer transportation time, as compared to Air transportation, and also does not need to be rehydrated on receipt at the receiving market compared to the packaging solutions available today. This allows significant savings from Air to sea freight, and also freshness of the flowers is maintained for a longer time saving the product from degradation.

## Claims

1. A flexible package made from a biodegradable polymeric flexible film, the flexible package comprising:
a pair of opposite panels;
a receptacle with at least two closed sides defined between the opposite panels, the receptacle having at least one open end for receiving a fresh produce; and
a plurality of apertures provided on at least one of the panels, the apertures are configured to provide a modified atmosphere packaging (MAP) for the fresh produce packed within the flexible package, wherein the biodegradable polymeric flexible film in conjunction with the modified atmosphere packaging (MAP) facilitates humidity exchange and controlled exchange of gases associated with the fresh produce, **characterised in that** the biodegradable polymeric flexible film offers a Water Vapour Transmission Rate (WVTR) in the range of 50 - 300 gms / 24hrs. / m² at 38°C and 90% relative humidity (RH) and an Oxygen Transmission Rate (OTR) in the range of 1000 - 4000 CC / 24hrs. / m² at 23°C.

2. The flexible package of Claim 1, wherein the biodegradable polymeric flexible film is made from a combination of biodegradable polymers.

3. The flexible package of Claim 1, wherein the biodegradable polymeric flexible film is one of a transparent film, semi-transparent film, opaque film, or a combination thereof.

4. The flexible package of Claim 2, wherein the biodegradable polymeric flexible film includes at least one of a partly or fully laminated structure, single layer substrate, multi-layer polymer - paper laminate, polymeric laminate, single or multilayer polymeric films or a combination thereof.

5. The flexible package of Claim 2, wherein the biodegradable polymer is at least one of Polyhydroxyalkanoates (PHAs), Poly-3-hydroxybutyrate (PHB), Polyhydroxyvalerate (PHV), Polyhydroxyhexanoate (PHH), Cellulose Acetate, Nitrocellulose, Poly Lactic Acid, Polybutylene Succinate (PBS), Polycaprolactone (PCL), Polyanhydrides, or a combination thereof.

6. The flexible package of Claim 2, wherein the biodegradable polymeric flexible film is made from the biodegradable polymer through extrusion.

7. The flexible package of Claim 1 includes a gusset.

8. The flexible package of Claim 1, wherein the apertures are formed using at least one of a laser beam, mechanical perforation technique, die punching or a combination thereof.

9. The flexible package of Claim 1, wherein formation of the apertures is in accordance with respiration rate of the fresh produce meant to be packed in the flexible package.

10. The flexible package of Claim 9, wherein the formation of the apertures includes predetermined number, size, shape, and position of the apertures on the flexible package.

11. The flexible package of Claim 1, wherein the open end is sealed to retain the fresh produce within the flexible package.

12. The flexible package of Claim 1, wherein the apertures providing the modified atmosphere packaging (MAP) are configured for exchange of gases between an inner atmosphere and an outer atmosphere of the flexible package for controlled respiration of the fresh produce packed in the flexible package.

13. The flexible package of Claim 1, wherein one or more handles are provided on at least one of the panels, the side gussets, or a combination thereof.

14. The flexible package of Claim 1, wherein the fresh produce includes at least one of fruits, vegetables, flowers.

## Patentansprüche

1. Flexible Verpackung, hergestellt aus einer biologisch abbaubaren flexiblen Polymerfolie, wobei die flexible Verpackung Folgendes umfasst:
ein Paar von gegenüberliegenden Bahnen;
ein Behältnis mit mindestens zwei geschlossenen Seiten, die zwischen den gegenüberliegenden Bahnen definiert sind, wobei das Behältnis mindestens ein offenes Ende zum Aufnehmen eines frischen Produkts aufweist; und
eine Mehrzahl von Öffnungen, die an mindestens einer der Bahnen vorgesehen sind, wobei die Öffnungen so ausgestaltet sind, dass sie ein Verpacken mit modifizierter Atmosphäre (modified atmosphere packaging, MAP) für das in der flexiblen Verpackung verpackte frische Produkt bereitstellen, wobei die biologisch abbaubare flexible Polymerfolie in Verbindung mit dem Verpacken mit modifizierter Atmosphäre (MAP) einen Feuchtigkeitsaustausch und einen gesteuerten Austausch von mit dem frischen Produkt verbundenen Gasen erleichtert, **dadurch gekennzeichnet, dass**
die biologisch abbaubare flexible Polymerfolie eine Wasserdampftransmissionsrate (WVTR) in dem Bereich von 50 - 300 g/24h/m² bei 38 °C und 90 % relativer Luftfeuchtigkeit (RH) und eine Sauerstofftransmissionsrate (OTR) in dem Bereich von 1000 - 4000 cm³/24h/m² bei 23 °C liefert.

2. Flexible Verpackung nach Anspruch 1, wobei die biologisch abbaubare flexible Polymerfolie aus einer Kombination von biologisch abbaubaren Polymeren hergestellt ist.

3. Flexible Verpackung nach Anspruch 1, wobei die biologisch abbaubare flexible Polymerfolie eines aus einer Klarsichtfolie, einer halbtransparenten Folie, einer opaken Folie oder einer Kombination hiervon ist.

4. Flexible Verpackung nach Anspruch 2, wobei die biologisch abbaubare flexible Polymerfolie mindestens eine/eines aus einer teilweise oder vollständig laminierten Struktur, einem Einzelschichtsubstrat, einem mehrschichtigen Polymer-Papier-Laminat, einem Polymerlaminat, einzel- oder mehrschichtigen Polymerfolie oder einer Kombination hiervon ist.

5. Flexible Verpackung nach Anspruch 2, wobei das biologisch abbaubare Polymer mindestens eines von Polyhydroxyalkanoaten (PHAs), Poly-3-hydroxybutyrat (PHB), Polyhydroxyvalerat (PHV), Polyhydroxyhexanoat (PHH), Celluloseacetat, Nitrocellulose, Polymilchsäure, Polybutylensuccinat (PBS), Polycaprolacton (PCL), Polyanhydriden oder einer Kombination hiervon ist.

6. Flexible Verpackung nach Anspruch 2, wobei die biologisch abbaubare flexible Polymerfolie durch Extrusion aus einem biologisch abbaubaren Polymer hergestellt ist.

7. Flexible Verpackung nach Anspruch 1, die eine Falte umfasst.

8. Flexible Verpackung nach Anspruch 1, wobei die Öffnungen unter Verwendung mindestens eines (Verfahrens) aus einer Laserstrahl- (Technik), einer mechanischen Perforationstechnik, Stanzen (die punching) oder einer Kombination hiervon ausgebildet sind.

9. Flexible Verpackung nach Anspruch 1, wobei die Ausbildung der Öffnungen in Übereinstimmung mit der Respirationsrate des frischen Produkts, das in der flexiblen Verpackung verpackt werden sollen, steht.

10. Flexible Verpackung nach Anspruch 9, wobei die Ausbildung der Öffnungen eine vorgegebene Anzahl, Größe, Form und Position der Öffnungen auf der flexiblen Verpackung umfasst.

11. Flexible Verpackung nach Anspruch 1, wobei das offene Ende verschlossen ist, um das frische Produkt in der flexiblen Verpackung aufzubewahren.

12. Flexible Verpackung nach Anspruch 1, wobei die Öffnungen, die für eine Verpackung mit modifizierter Atmosphäre (MAP) sorgen, für einen Austausch von Gasen zwischen einer inneren Atmosphäre und einer äußeren Atmosphäre der flexiblen Verpackung für eine gesteuerte Respiration des in der flexiblen Verpackung verpackten frischen Produkts konfiguriert sind.

13. Flexible Verpackung nach Anspruch 1, wobei ein oder mehrere Griffe auf mindestens einer der Bahnen, den seitlichen Falten oder einer Kombination hiervon vorgesehen sind.

14. Flexible Verpackung nach Anspruch 1, wobei das frische Produkt mindestens eines von Früchten, Gemüse, Blumen umfasst.

## Revendications

1. Emballage souple fabriqué à partir d'un film souple polymère biodégradable, l'emballage souple comprenant :
une paire de panneaux opposés ;
un réceptacle muni d'au moins deux côtés fermé défini entre les panneaux opposés, le réceptacle possédant au moins une extrémité ouverte permettant de recevoir un produit frais ; et
une pluralité d'ouvertures installées sur au moins un des panneaux, les ouvertures sont conçues pour fournir un emballage sous atmosphère modifiée (MAP) pour le produit frais emballé au sein de l'emballage souple, dans lequel le film souple polymère biodégradable en conjonction avec l'emballage sous atmosphère modifiée (MAP) facilite un échange d'humidité et un échange contrôlé de gaz associé au produit frais, **caractérisé en ce que** le film flexible polymère biodégradable offre un taux de transmission de vapeur d'eau (WVTR) dans la plage comprise entre 50 et 300 gms / 24hrs / m² à une température de 38 °C et une humidité relative (RH) de 90 % et un taux de transmission d'oxygène (OTR) dans la plage comprise entre 1000 et 4000 CC / 24 hrs / m² à une température de 23 °C.

2. Emballage souple selon la revendication 1, dans lequel le film souple polymère biodégradable est fabriqué à partir d'une combinaison de polymères biodégradables.

3. Emballage souple selon la revendication 1, dans lequel le film souple polymère biodégradable est un parmi un film transparent, un film semi-transparent, un film opaque ou une combinaison de ceux-ci.

4. Emballage souple selon la revendication 2, dans lequel le film souple polymère biodégradable inclut au moins un parmi une structure partiellement ou complètement stratifiée, un substrat à couche unique, un polymère à couches multiples, un papier stratifié, un polymère stratifié, des films polymères à couche unique ou à couches multiples ou une combinaison de ceux-ci.

5. Emballage souple selon la revendication 2, dans lequel le polymère biodégradable est au moins un parmi des polyhydroxyalkanoates (PHAs), du poly-3-hydroxybuyrate (PHB), du polyhydroxyvalérate (PHV), du polyhydroxyhexanoate (PHH), de l'acétate de cellulose, de la nitrocellulose, de l'acide polylactique, du succès natte de polybuthylène (PBS), de la polycaprolactone (PCL), des polyanhydrides ou une combinaison de ceux-ci

6. Emballage souple selon la revendication 2, dans lequel le film souple polymère biodégradable est fabriqué à partir du polymère biodégradable par extrusion.

7. Emballage souple selon la revendication 1 qui comprend un soufflet.

8. Emballage souple selon la revendication 1, dans lequel les ouvertures sont formées en utilisant au moins un parmi un faisceau laser, une technique de perforation mécanique, le poinçonnage ou une combinaison de ceux-ci .

9. Emballage souple la revendication 1, dans lequel la formation des ouvertures est en accord avec un taux de respiration du produit frais qui doit être emballé dans l'emballage souple.

10. Emballage souple selon la revendication 9, dans lequel la formation des ouvertures comprend un nombre, une taille, une forme et une position prédéterminés des ouvertures sur l'emballage souple.

11. Emballage souple selon la revendication 1, dans lequel l'extrémité ouverte est scellée afin de conserver le produit frais au sein de l'emballage souple.

12. Emballage souple selon la revendication 1, dans lequel les ouvertures fournissant l'emballage sous atmosphère modifiée (MAP) sont conçues pour permettre un échange de gaz entre une atmosphère interne et une atmosphère externe de l'emballage souple pour permettre une respiration contrôlée du produit frais emballé dans l'emballage souple.

13. Emballage souple selon la revendication 1, dans lequel une ou plusieurs poignées sont installées sur au moins un des panneaux, sur les soufflets latéraux ou sur une combinaison de ceux-ci.

14. Emballage souple selon la revendication 1, dans lequel le produit frais inclut au moins un parmi des fruits, des légumes et des fleurs.
